# EUROPÄISCHE PATENTSCHRIFT

(11) **EP 1 325 775 B1**
(45) Veröffentlichungstag und Bekanntmachung des Hinweises auf die Patenterteilung: **26.07.2006**
(21) Anmeldenummer: 02022395.4
(22) Anmeldetag: 10.10.2002
(51) Int. Cl.: B01J 8/18, B01J 8/26, B01J 2/16

(54) **Strahlschichtapparat zur chargenweisen oder kontinuierlichen Prozessführung und Verfahren zum Betreiben eines Strahlschichtapparates**
Jet bed apparatus for batchwise or continuous processing and process using the jet bed apparatus
Appareillage à lit aéré pour des procédés en continues ou en discontinues et procédé d'usage de l'appareillage à lit aéré

(30) Priorität: 20.12.2001 DE 10162781
(43) Veröffentlichungstag der Anmeldung: 09.07.2003
(73) Patentinhaber: Glatt Ingenieurtechnik GmbH, D-99427 Weimar (DE)
(72) Erfinder: Jacob, Michael, 99427 Weimar (DE); Waskow, Mike, 99423 Weimar (DE); Rümpler, Karlheinz, Dr., 99425 Weimar (DE)
(74) Vertreter: Maucher, Wolfgang

(56) Entgegenhaltungen:
- EP-A- 0 857 930
- WO-A-01/43861
- DE-A- 3 400 397
- DE-C- 10 004 939
- GB-A- 736 036
- US-A- 5 395 449

## Beschreibung

Die Erfindung betrifft einen Strahlschichtapparat zur chargenweisen oder kontinuierlichen Prozessführung und ein Verfahren zum Betreiben eines derartigen Strahlschichtapparates.

Aus der US-A-5 395 449 ist bereits ein Wirbelschichtapparat bekannt, bei dem durch Zwischenwände mehrere Prozessbereiche innerhalb eines Apparates gebildet werden. Dabei wird die als Prozessgas verwendete Luft über poröse Platten in die Prozessbereiche eingebracht. In US-A-5 395 449 wird es als wesentlich betrachtet, dass in allen Bereichen des Apparates eine zufällige Partikelbewegung durch einen Wirbelschichtzustand erzeugt wird. Dies bedeutet, dass in allen Punkten des Apparates eine ausreichende Fluidisierung vorliegt, um die zu beschichtenden Teilchen gesichert in Wirbelschichtzustand zu halten. Über unterschiedliche Porositäten wird erreicht, dass in näher der Sprühdüsen höhere Gasgeschwindigkeiten erzeugt werden. Damit wird ein Auflockern der Wirbelschicht in Düsennähe bewirkt. In US-A-5 395 449 wird aber auch darauf hingewiesen, dass die Teilchen nicht - wie beispielsweise beim chargenweisen Wurster-Verfahren - vertikal durch eine Art pleumatischen Transport nach oben geblasen werden. Stattdessen wird davon ausgegangen, dass sich die Teilchen zufällig in den Bereich höherer Gasgeschwindigkeit hinein- und wieder hinaus bewegen. Dieser Austausch wird in US-A-5 395 449 als Zirkulation bezeichnet und charakterisiert nicht eine zyklische und gerichtete Partikelbewegung. In der US-A-5 395 449 findet der Prozess in einer konventionellen und dem Stand der Technik entsprechenden Wirbelschicht statt.

Aus der DE 100 04 939 C1 ist bereits ein Strahlschichtapparat zur Fluidisierung und thermischen Behandlung von weitgehend beliebig geformter und in ihren Partikelabmessungen sowie Partikelmassen unterschiedlich bestehenden Materialien bekannt. Der Strahlschichtapparat zur chargenweisen oder kontinuierlichen Prozessführung besteht aus einer im unteren Bereich des Strahlschichtapparates angeordneten Zuluftkammer, in der das Fluidisierungsmittel, wie beispielsweise Luft, zugeführt wird. Das Fluidisierungsmittel wird mittels einer zwischen Zuluftkammer und Fluidisierungsbereich angeordneten steuerbaren Gasanströmeinrichtung dem Fluidisierungsbereich des Strahlschichtapparats zugeführt. Der Fluidisierungsbereich wird durch die im unteren Bereich angeordnete Gasanströmeinrichtung sowie durch eine Strahleinströmungswand, einer der Strahleinströmungswand gegenüberliegenden Strahlrückströmungswand sowie den Seitenwänden gebildet. Die Strahleinströmungswand und die Strahlrückströmungswand sind gegenüber der Senkrechten geneigt, so dass sie einen Konus bilden. Dadurch entsteht oberhalb der Strahleinströmungswand und der Strahlrückströmungswand ein erweiterter Querschnitt des Strahlschichtapparates, der als Expansionsbereich für das Fluidisierungsmittel dient und der mit einem Austrag für die Abluft versehen ist. Der Strahlschichtapparat kann dabei einseitig oder doppelseitig, das heißt mit einem doppelten Konus, ausgebildet sein. Durch die Anordnung der Strahleinströmungswand und der Strahlrückströmungswand sowie durch die Zuführung des Fluidisierungsmittels durch die Gasanströmeinrichtung entsteht in dem Fluidisierungsbereich eine Art Feststoffrotation, in der eine entsprechende Materialbehandlung erfolgt.

Nachteilig bei dem beschriebenen Strahlschichtapparat ist, dass eine gezielte Beeinflussung der durchzuführenden Prozesse in dem Fluidisierungsbereich nur in geringem Maße erfolgt. Das Verweilzeitverhalten des Materials bei einer kontinuierlichen Prozessführung kann nur in geringen Grenzen beeinflusst werden.

Die Aufgabe der Erfindung besteht darin, einen Strahlschichtapparat zur chargenweisen oder kontinuierlichen Prozessführung und ein Verfahren zum Betreiben eines Strahlschichtapparates der eingangs beschriebenen Art so zu gestalten, dass damit eine zielgerichtete Beeinflussung der Prozesse im Fluidisierungsbereich, insbesondere hinsichtlich einer gezielten Materialbewegung und Verweilzeitbeeinflussung erfolgt.

Entsprechend der erfindungsgemäßen Vorrichtung wird die Aufgabe mit den Merkmalen des Anspruches 1 und das dazugehörige Verfahren zum Betreiben des Strahlschichtapparates durch die Merkmale des Anspruches 8 gelöst. Vorteilhafte Ausgestaltungen der Vorrichtung und des Verfahrens sind in den Unteransprüchen angegeben.

Durch die Anordnung von mehreren an sich bekannten Strahlschichtapparaten mit unterschiedlicher Gestaltung und einstellbaren Prozessbedingungen wird erreicht, dass bei einer kontinuierlichen Prozessführung die Verweilzeit sowie die Prozessbedingungen in den einzelnen Prozessbereichen einstellbar sind. Durch entsprechende hintereinander und/oder nebeneinander Anordnung von einzelnen Prozessbereichen, die miteinander durch Überläufe verbunden sind, wird eine gezielte Materialbewegung in dem Strahlschichtapparat erreicht. Gleichzeitig wird damit die Verweilzeit im Strahlschichtapparat gezielt beeinflusst. Durch Einstellung der Strömungsgeschwindigkeit, der Temperatur und des Volumens des zugeführten Fluidisierungsmittels lassen sich die Prozessbedingungen in den einzelnen Prozessbereichen entsprechend den für die Materialbehandlung erforderlichen Bedingungen einstellen. Dadurch besteht die Möglichkeit, die erfindungsgemäße Vorrichtung und das erfindungsgemäße Verfahren zur Behandlung von unterschiedlichen Materialien bei den jeweilig einzustellenden Bedingungen hinsichtlich der Fluidisierung und thermischen Behandlung von weitgehend beliebig geformten und in ihren Abmessungen sowie Massen beliebigen Partikeln einzusetzen.

Die Erfindung wird anhand von Ausführungsbeispielen näher erläutert. In den dazugehörigen Zeichnungen zeigen:
- Fig. 1:: eine schematische Darstellung des erfindungsgemäßen Strahlschichtapparates,
- Fig. 2:: den erfindungsgemäßen Strahlschichtapparat in perspektivischer Darstellung,
- Fig. 3:: eine Variante des erfindungsgemäßen Strahlschichtapparats in perspektivischer Darstellung,
- Fig. 4:: die Feststoffbewegung und Fluidisierungsströmung im erfindungsgemäßen Strahlschichtapparat und
- Fig. 5 bis 7:: Varianten der Anordnung von mehreren Prozessbereichen im erfindungsgemäßen Strahlschichtapparat.

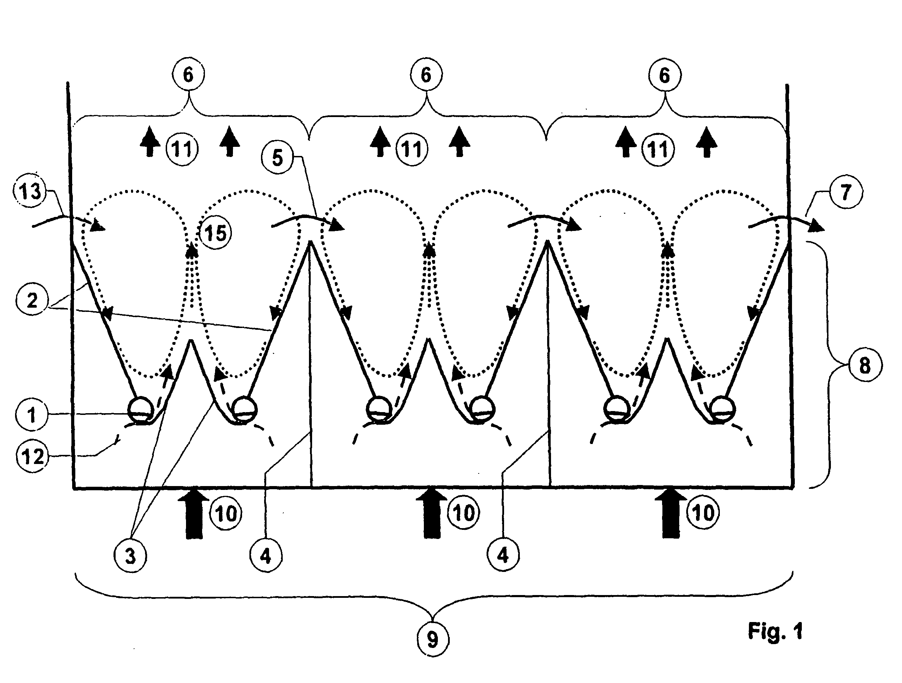

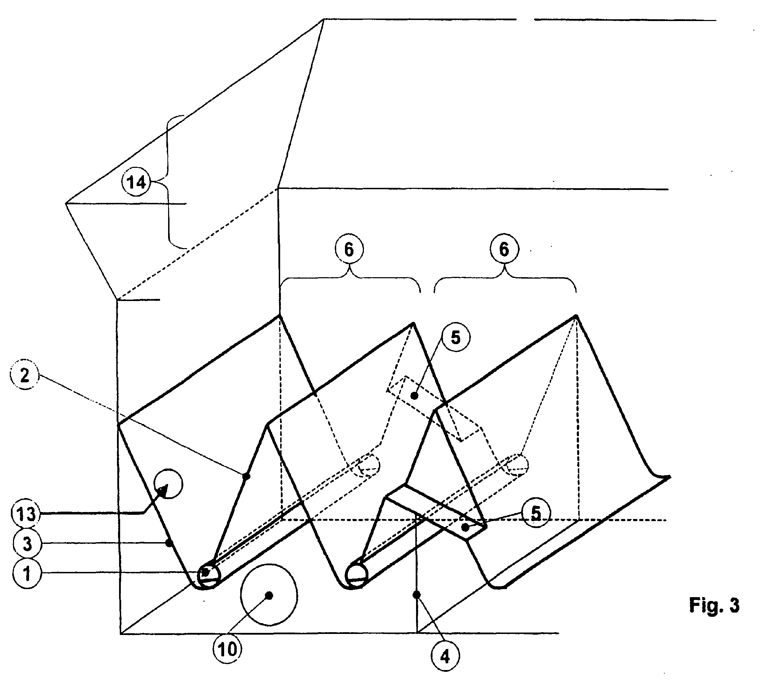

In Figur 1 ist ein erfindungsgemäßer Strahlschichtapparat dargestellt, der aus wenigstens zwei hintereinander angeordneten Prozessbereichen 6 besteht. Der Prozessbereich 6 besteht aus einem an sich bekannten Strahlschichtapparat, der aus einer Zuluftkammer 8, zwei Gasanströmeinrichtungen 1, den entsprechenden Strahleinströmungswänden 3, Strahlrückströmungswänden 2 sowie den Seitenwänden gebildet wird. Die Strahleinströmungswände 3 und die Strahlrückströmungswände 2 sind gegenüber der Senkrechten derart geneigt, dass sie einen Doppelkonus bilden. In Figur 3 ist der Prozessbereich 6 als einseitig ausgeführter Strahlschichtapparat mit nur einer Gasanströmeinrichtung 1, mit einer Strahleinströmungswand 3 und einer gegenüberliegenden Strahlrückströmungswand 2 sowie den entsprechenden Seitenwänden dargestellt. Die Strahleinströmungswand 3 und die Strahlrückströmungswand 2 bilden dabei einen einfachen Konus.

Erfindungsgemäß sind mindestens zwei oder mehrere Prozessbereiche 6 derart im Apparatequerschnitt 9 angeordnet, dass sich bei kontinuierlicher bzw. quasi-kontinuierlicher Prozessführung ein mehrstufiger Prozess ausbildet. Dabei durchläuft der am Prozess beteiligte Feststoff, der über einen am ersten Prozessbereich 6 angeordneten Feststoffeintrag 13 in den Strahlschichtapparat eingetragen wird, nacheinander mehrere Prozessbereiche 6 bis er den Strahlschichtapparat über einen am letzten Prozessbereich 6 angeordneten Feststoffaustrag 7 wieder verlässt. Zwischen den einzelnen nebeneinanderliegenden Prozessbereichen 6 sind in den jeweiligen anliegenden Strahleinströmungswänden 3 und Strahlrückströmungswänden 2 der nebeneinanderliegenden Prozessbereiche 6 Überläufe 5 angeordnet, durch die der Feststoff in den folgenden Prozessbereich 6 geführt wird. Die Überläufe 5 können durch Kanäle, Querschnittsöffnungen, beliebige Transportsysteme oder dergleichen gebildet werden.

Bedingt durch die Mehrstufigkeit liegt zwischen der Feststofftransportrichtung und der Strömung des Fluidisierungsmittels, die sich durch die über die Gasanströmeinrichtung 1 zugeführte Zuluft 10 ergibt und die als Abluft 11 den Prozessbereich 6 verlässt, ein Kreuzstrom vor. Die technische Ausführung der Prozessbereiche 6 selbst kann variiert werden. In der Figur 1 ist die Ausführung des Fluidisierungsmitteleintrittes durch die Gasanströmeinrichtung 1 im wesentlichen als symmetrischer Spalt gezeigt. Das bedeutet, dass das Fluidisierungsmittel als Zuluft 10 (meistens Luft) im unteren Bereich in den Strahlschichtapparat eintritt. Dabei kann die Zuführungsrichtung vertikal, horizontal oder in beliebiger Richtung sein.

Charakteristisch ist, dass die Strömungsbedingungen in der Zuluftkammer 8 unterhalb der Prozessbereiche 6 vergleichmäßigt werden. Die Zuluft 10 verteilt sich auf die Prozessbereiche 6, durchströmt die Gasanströmeinrichtung 1 und gelangt in den Prozessraum (Fluidisierungsbereich) oberhalb der Strahleinströmungswand 3 und der Strahlrückströmungswand 2, um die Partikelströmung 15 aufzubauen. Die Fluidisierungsmitteleintritte der Gasanströmeinrichtung 1 können aus einem Spalt, perforierten Blechen, usw. oder auch aus Drosseleinbauten bestehen, über die jeweils die zugeführte Fluidisierungsmittelmenge eingestellt wird.

Als Variation der Strömungsaufteilung können in der Zuluftkammer 8 auch Segmentierungen 4 eingesetzt werden. Dabei ist es nicht zwingend erforderlich, dass jedem Prozessbereich 6 ein separater Anströmbereich zugeordnet wird. Das Fluidisierungsmittel tritt als Luftströmung im Spaltquerschnitt 12 in den unteren Teil des Prozessbereiches 6 ein. Anschließend wird es entsprechend der Geometrie geleitet und strömt anschließend vorzugsweise aufwärts und reißt den im Bereich enthaltenen Feststoff mit. Dadurch bildet sich eine wenig- bis hochturbulente Partikelströmung 15 aus. Diese kann die Geschwindigkeitsbereiche vom durchströmten Festbett bis zum Grenzbereich der Flugförderung umfassen. Bei höheren Geschwindigkeiten bildet sich eine Art feststoffseitige Zirkulationsströmung aus, da sich die Fluidisierungsgeschwindigkeit durch Expansion im oberen Expansionsbereich 14 oder in darüber angeordneten Apparateteilen verringert und der Feststoff auf den Strahlrückströmungswänden 2 zurückströmt. Von dort aus bewegt er sich wieder auf den Fluidisierungsmitteleintritt der Gasanströmeinrichtung 1 zu, wo er wieder von der Strömung in Richtung der Strahleinströmungswände 3 mitgerissen wird.

Ein wesentliches Merkmal der erfindungsgemäßen Lösung besteht darin, dass in den einzelnen Prozessbereichen 6 unterschiedliche Prozessbedingungen einstellbar sind. Dabei sind die Prozessbedingungen in den einzelnen Prozessbereichen 6 durch Gestaltung und der Größe der jeweiligen Prozessbereiche 6 und/oder durch unterschiedliche Strömungsgeschwindigkeiten, Temperaturen und Volumenströme des zugeführten Fluidisierungsmittels einstellbar.

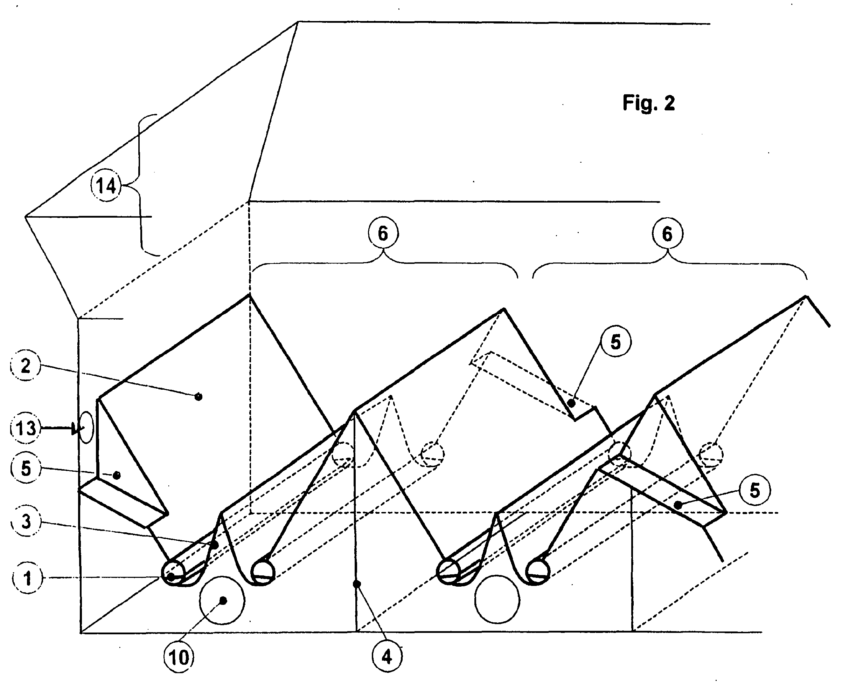

In der Figur 2 wird die technische Ausführung in einem weiteren Beispiel erläutert. Durch Überläufe 5 wird der Feststoffzu- und -ablauf ermöglicht. In der Darstellung wird deutlich, dass der Feststoff in den Prozessbereichen 6 fluidisiert wird. Da das Aufgabegut stirnseitig über den Feststoffeintrag 13 oder an einer Längsseite in den jeweiligen Prozessbereich 6 kontinuierlich oder quasi-kontinuierlich eintritt, wird der Feststoffrotation R eine im wesentlichen längs zum Fluidisierungsmitteleintritt 1 orientierte Feststoffbewegung überlagert. Dadurch bewegt sich der zugeführte Feststoff in Richtung der Zuführung zum darauffolgenden Prozessbereich 6. Auf diese Art und Weise wandern die fluidisierten Partikel mäanderförmig durch den Apparat. Dadurch wird eine möglichst gerichtete Materialflussrichtung vorgegeben. Der Feststoff verlässt die Prozessbereiche 6 über den Feststoffaustrag 7.

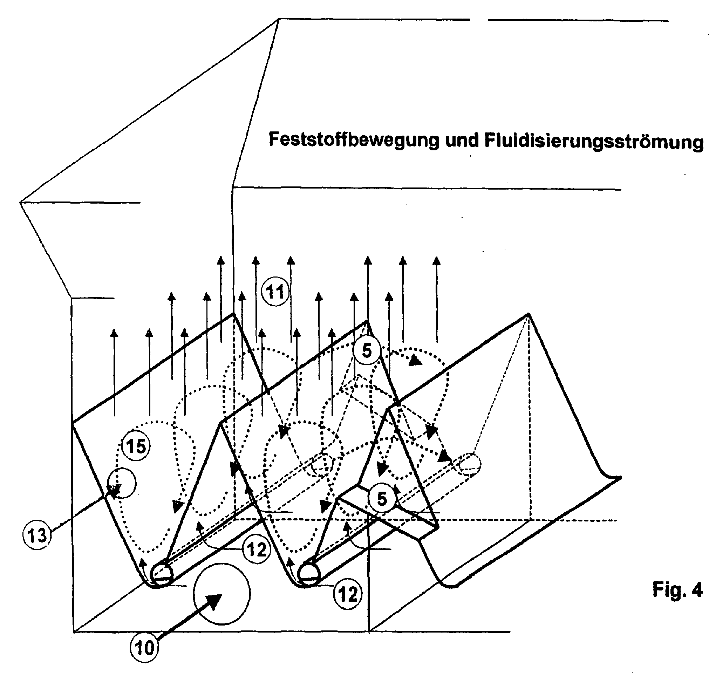

In der Figur 4 ist schematisch die Feststoffbewegung und die Strömung des Fluidisierungsmittels dargestellt.

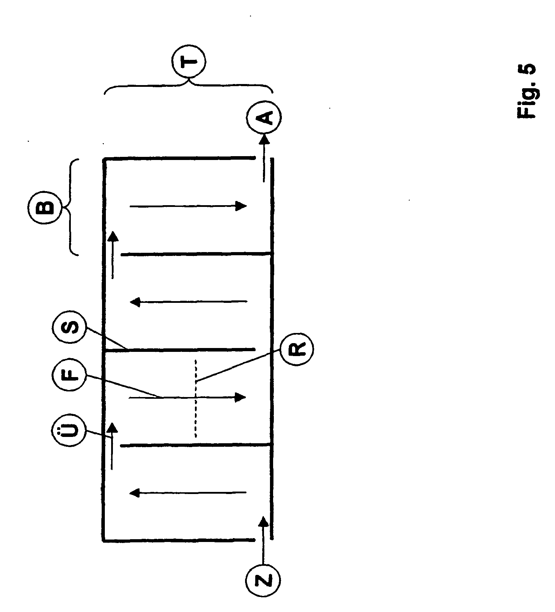

Durch die Art der räumlichen Anordnung der Prozessbereiche 6 sowie durch Variation deren Geometrie können die verschiedenartigsten Feststoffströmungen realisiert werden. Die Figuren 5 bis 7 zeigen dazu einige Varianten. In den einzelnen Figuren ist mit Z der Feststoffzulauf in den ersten Prozessbereich 6 und mit A der Feststoffaustritt aus dem in Materialflussrichtung F gesehenen letzten Prozessbereich 6 dargestellt. Mit Ü ist der Feststoffüberlauf von einem Prozessbereich 6 zu dem nächsten gekennzeichnet. Mit S ist die entsprechende Segmentierung der Zuluftkammer 8, mit R die Feststoffrotation in dem Prozessbereich 6, und mit B die Breite und mit T die Tiefe des Prozessbereichs 6 dargestellt.

In Figur 5 sind mehrere einzelne Prozessbereiche 6 hintereinander angeordnet, wobei das Material mäanderförmig durch den Strahlschichtapparat geführt wird.

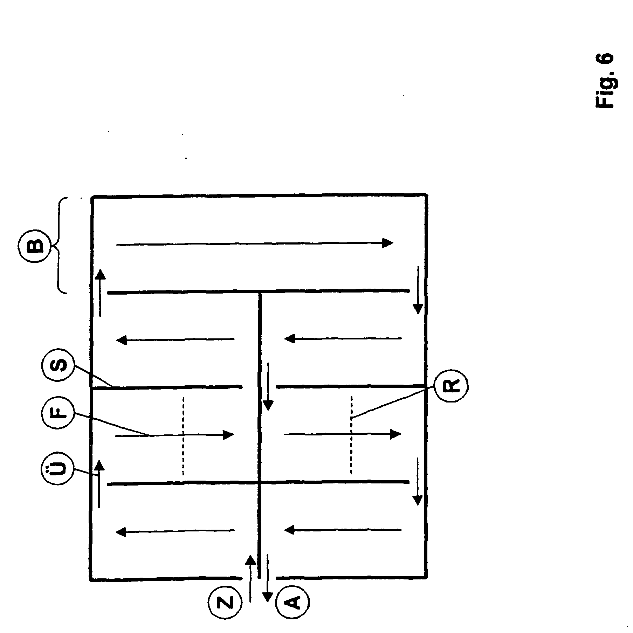

In Figur 6 sind mehrere einzelne Prozessbereiche 6 hintereinander und nebeneinander angeordnet, wobei die Größe der Prozessbereiche 6 unterschiedlich ist.

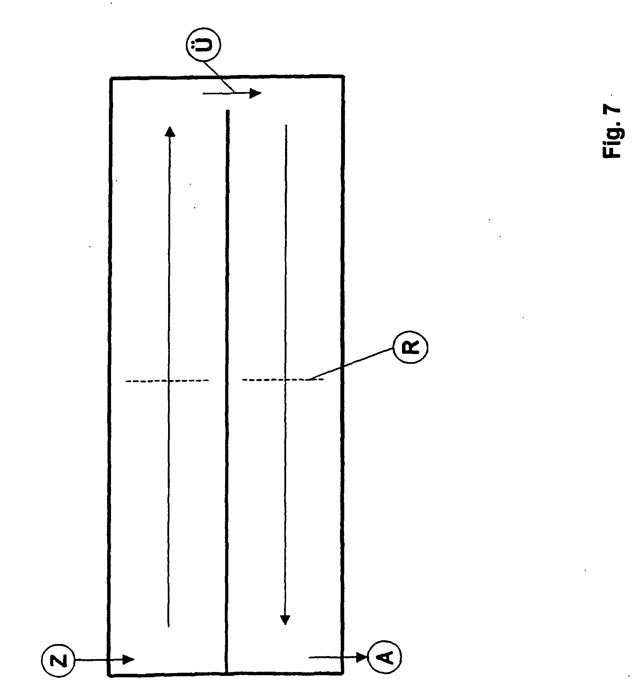

Figur 7 zeigt zwei nebeneinander angeordnete Prozessbereiche 6. Die hier dargestellten Varianten sollen nicht einschränkend wirken, sondern stellen nur entsprechende Möglichkeiten dar. Andere Anordnung, auch hinsichtlich der Anzahl der einzelnen Prozessbereiche 6, ist denkbar und beinhaltet die erfindungsgemäße Lösung.

### Zusammenfassend ist also folgendes festzustellen:

Die Erfindung betrifft einen Strahlschichtapparat zur chargenweise oder kontinuierlichen Prozessführung gemäß der im Oberbegriff des Anspruches 1 genannten Merkmale und ein Verfahren zum Betreiben eines Strahlschichtapparates gemäß der im Oberbegriff des Anspruches 8 genannten Merkmale.

Die Aufgabe der Erfindung besteht darin, einen Strahlschichtapparat zur chargenweise oder kontinuierlichen Prozessführung und ein Verfahren zum Betreiben eines Strahlschichtapparates der eingangs beschriebenen Art so zu gestalten, dass damit eine zielgerichtete Beeinflussung der Prozesse im Fluidisierungsbereich insbesondere hinsichtlich einer gezielten Materialbewegung und Verweilzeitbeeinflussung erfolgt.

Erfindungsgemäß wird das dadurch erreicht, dass der Strahlschichtapparat aus wenigstens zwei Prozessbereichen gebildet wird und die Prozessbereiche durch Überläufe miteinander verbunden sind und der erste Prozessbereich mit einem Feststoffeintrag und der letzte Prozessbereich mit einem Feststoffaustrag versehen ist, beziehungsweise dass zur Beeinflussung der Verweilzeit das zu behandelnde Material nacheinander wenigstens zwei Prozessbereichen zugeführt wird und diese durchläuft, wobei die Materialtransportrichtung gegenüber der Strömung des Fluidisierungsmittels im Kreuzstrom erfolgt.

### Aufstellung der verwendeten Bezugszeichen

- 1: Gasanströmeinrichtung
- 2: Strahlrückströmungswand
- 3: Strahleinströmungswand
- 4: Segmentierung
- 5: Überlauf
- 6: Prozessbereich
- 7: Feststoffaustrag
- 8: Zuluftkammern
- 9: Apparatequerschnitt
- 10: Zuluft
- 11: Abluft
- 12: Luftströmung im Spaltquerschnitt
- 13: Feststoffeintrag
- 14: Expansionsbereich (optional)
- 15: Partikelströmung
- Z: Feststoffzulauf
- A: Feststoffaustritt
- Ü: Feststoffüberlauf / Transport
- S: Segmentierung
- B: Breite des Prozessbereiches
- T: Tiefe des Prozessbereiches
- F: Feststoff - Fliessrichtung
- R: Feststoff - Rotation

## Patentansprüche

1. Strahlschichtapparat zur chargenweisen oder kontinuierlichen Prozessführung mit folgender Bauart:
- einem im wesentlichen aus einer Zuluftkammer, einem Fluidisierungsbereich und einem Gasaustritt gebildeten Strahlschichtapparat,
- einer im Bereich zwischen Zuluftkammer und Fluidisierungsbereich angeordneten Gasanströmeinrichtung zur Zuführung von Fluidisierungsmittel,
- dem Fluidisierungsbereich, der durch wenigstens eine Gasanströmeinrichtung, eine Strahleinströmungswand und eine gegenüberliegende Strahlrückströmungswand sowie den Seitenwänden gebildet wird, wobei die Strahleinströmungswand und die Strahlrückströmungswand gegenüber der Senkrechten derart geneigt sind, dass sie einen Konus bilden,
- dem den Prozessbereich bildenden Strahlschichtapparat, der ein- oder doppelseitig ausgebildet ist,
- dem doppelseitigen Strahlschichtapparat, der durch zwei Gasanströmeinrichtungen und den entsprechenden Strahleinströmungswänden, Strahlrückströmungswänden sowie den Seitenwänden gebildet wird,
- einem oberhalb der Strahleinströmungswände und Strahlrückströmungswände erweiterten Querschnitt des Strahlschichtapparates, an dem der Austritt für die Abluft angeordnet ist,
- wobei der Strahlschichtapparat aus wenigstens zwei Prozessbereichen (6) gebildet wird und die Prozessbereiche (6) durch Überläufe (5) miteinander verbunden sind und der erste Prozessbereich (6) mit einem Feststoffeintrag (13) und der letzte Prozessbereich (6) mit einem Feststoffaustrag (7) versehen ist,
- und wobei die Überläufe (5) in den jeweiligen anliegenden Strahlrückströmungswänden (2) der nebeneinanderliegenden Prozessbereiche (6) angeordnet sind und durch Kanäle, Querschnittsöffnungen oder dergleichen gebildet werden.

2. Strahlschichtapparat nach Anspruch 1, **dadurch gekennzeichnet, dass** die einzelnen Prozessbereiche (6) hintereinander und/oder nebeneinander angeordnet sind.

3. Strahlschichtapparat nach Anspruch 1 und 2, **dadurch gekennzeichnet, dass** die Größe der einzelnen Prozessbereiche (6) gleich und/oder unterschiedlich sind.

4. Strahlschichtapparat nach Anspruch 1 bis 3, dass die einzelnen Prozessbereiche (6) im Bereich der Zuluftkammern (8) durch Segmentierungen (4) voneinander getrennt sind.

5. Strahlschichtapparat nach Anspruch 1 bis 4, **dadurch gekennzeichnet, dass** der Feststoffeintrag (13) in dem ersten Prozessbereich (6) stirnseitig oder an einer Längsseite der Strahlrückströmungswand (2) angeordnet ist.

6. Strahlschichtapparat nach Anspruch 1 bis 5, **dadurch gekennzeichnet, dass** die Überläufe (5) zwischen den einzelnen Prozessbereichen (6) so angeordnet sind, dass eine mäanderförmige Materialführung durch die einzelnen Prozessbereiche (6) des Strahlschichtapparates erfolgt.

7. Verfahren zum Betreiben eines Strahlschichtapparates gemäß einem der Ansprüche 1 bis 6, bei der
- eine chargenweise oder kontinuierliche Prozessführung zur Fluidisierung und thermischen Behandlung von weitgehend beliebig geformten und in ihren Abmessungen sowie Massen beliebigen Partikeln erfolgt,
- das zu behandelnde Material im Prozessbereich in einer Partikelströmung fluidisiert wird,
- das Fluidisierungsmittel über eine steuerbare Gasanströmungseinrichtung von unten dem Prozessbereich zugeführt wird,
**dadurch gekennzeichnet, dass** zur Beeinflussung der Verweilzeit das zu behandelnde Material nacheinander wenigstens zwei Prozessbereichen (6) zugeführt wird und diese durchläuft, wobei die Materialtransportrichtung (F) gegenüber der Strömung des Fluidisierungsmittels im Kreuzstrom erfolgt.

8. Verfahren nach Anspruch 7, **dadurch gekennzeichnet, dass** die Größe der Geschwindigkeit der Partikelströmung (15) im jeweiligen Prozessbereich (6) der Strahlschicht vom durchströmten Festbett bis zum Grenzbereich der Flugförderung des zu behandelnden Materials beträgt.

9. Verfahren nach Anspruch 7 und 8, **dadurch gekennzeichnet, dass** in den einzelnen Prozessbereichen (6) unterschiedliche Prozessbedingungen einstellbar sind.

10. Verfahren nach Anspruch 7 bis 9, **dadurch gekennzeichnet, dass** die Prozessbedingungen in den einzelnen Prozessbereichen (6) durch Gestaltung und Größe der jeweiligen Prozessbereiche (6) und/oder durch unterschiedliche Strömungsgeschwindigkeiten, Temperaturen und Volumenströme des zugeführten Fluidisierungsmittels einstellbar sind.

11. Verfahren nach Anspruch 8 bis 10, **dadurch gekennzeichnet, dass** der Materialtransport durch die einzelnen Prozessbereiche (6) des Strahlschichtapparates mäanderförmig erfolgt.

## Claims

1. Spouted bed apparatus for batchwise or continuous process, having the following construction:
a spouted bed apparatus formed essentially from an air inlet chamber, a fluidising region and a gas outlet,
a gas inflow device disposed in the region between the air inlet chamber and the fluidising region, for supplying fluidising medium,
the fluidising region, which is formed by at least one gas inflow device, a jet inflow wall and an opposing jet backflow wall and the side walls, the jet inflow wall and the jet backflow wall being inclined relative to the vertical so as to form a cone,
the spouted bed apparatus forming the processing region, which is of singleor double-sided construction,
the double-sided spouted bed apparatus which is formed by two gas inflow devices and the corresponding jet inflow walls, jet backflow walls and the side walls,
a widened cross-section of the spouted bed apparatus above the jet inflow walls and jet backflow walls, at which the outlet for the exhaust air is disposed,
the spouted bed apparatus being formed by at least two processing regions (6) and the processing regions (6) being joined together by overflows (5) and the first processing region (6) being provided with an inlet (13) for solids and the last processing region (6) being provided with an outlet (7) for solids,
and the overflows (5) being arranged in the respective adjacent jet backflow walls (2) of the processing regions (6) located side by side, and being formed by channels, cross-sectional openings or the like.

2. Spouted bed apparatus according to claim 1, **characterised in that** the individual processing regions (6) are arranged behind and/or beside one another.

3. Spouted bed apparatus according to claims 1 and 2, **characterised in that** the sizes of the individual processing regions (6) are the same and/or different.

4. Spouted bed apparatus according to claims 1 to 3, **characterised in that** the individual processing regions (6) are separated from one another in the region of the air inlet chambers (8) by segmentations (4).

5. Spouted bed apparatus according to claims 1 to 4, **characterised in that** the solids inlet (13) is arranged in the first processing region (6) in the end wall or on a longitudinal side of the jet backflow wall (2).

6. Spouted bed apparatus according to claims 1 to 5, **characterised in that** the overflows (5) between the individual processing regions (6) are arranged so that the material is guided along a meandering path through the individual processing regions (6) of the spouted bed apparatus.

7. Method of operating a spouted bed apparatus according to one of claims 1 to 6, wherein
batchwise or continuous processing is carried out for the fluidisation and thermal treatment of particles of substantially any desired shape and of any desired dimensions and mass,
the material to be treated is fluidised in a particle flow in the processing region,
the fluidising medium is supplied to the processing region through a controllable gas inflow device from below,
**characterised in that** in order to influence the retention time the material to be treated is fed into at least two processing regions (6) one after the other and passes through them, while the direction of conveying (F) of the material is in cross-current to the flow of fluidising medium.

8. Method according to claim 7, **characterised in that** the speed level of the flow (15) of particles in the processing region (6) of the spouted bed ranges from the speed through the solid bed up to the borderline speed in flight of the material to be treated.

9. Method according to claims 7 and 8, **characterised in that** different processing conditions can be selected in the individual processing regions (6).

10. Method according to claims 7 to 9, **characterised in that** the processing conditions in the individual processing regions (6) can be selected by the shape and size of the particular processing regions (6) and/or by different flow velocities, temperatures and volume flows of the fluidising medium supplied.

11. Method according to claims 8 to 10, **characterised in that** the transporting of material through the individual processing regions (6) of the spouted bed apparatus is along a meandering path.

## Revendications

1. Appareillage à lit fluidisé pour des processus discontinus ou continus comprenant la structure suivante :
- un appareillage à lit fluidisé formé essentiellement d'une chambre d'air frais, d'une zone de fluidisation et d'une sortie de gaz,
- un dispositif de soufflage de gaz situé dans la zone située entre la chambre d'air frais et la zone de fluidisation, destiné à amener le milieu de fluidisation,
- la zone de fluidisation, qui est formée par au moins un dispositif de soufflage de gaz, une paroi d'afflux du jet et une paroi de reflux du jet opposée ainsi que des parois latérales, la paroi d'afflux du jet et la paroi de reflux du jet étant inclinées par rapport à la verticale, de telle sorte qu'elles forment un cône,
- l'appareillage à lit fluidisé formant la zone de processus, qui est conçue avec une ou deux faces,
- l'appareillage à lit fluidisé à deux faces, qui est formé par deux dispositifs de soufflage de gaz et les parois d'afflux de jet, les parois de reflux de jet correspondantes ainsi que les parois latérales,
- une section transversale élargie de l'appareillage à lit fluidisé au-dessus des parois d'afflux de jet et des parois de reflux de jet, sur laquelle est disposée la sortie pour l'air vicié,
- l'appareillage à lit fluidisé étant formé d'au moins deux zones de processus (6) et les zones de processus (6) étant reliées l'une à l'autre par des déversoirs (5) et la première zone de processus (6) étant pourvue d'un orifice d'alimentation en matériaux solides (13) et la dernière zone de processus (6) d'un orifice d'évacuation des matériaux solides (7),
- et les déversoirs (5) étant disposés dans les parois de reflux de jet (2) adjacentes respectives des zones de processus (6) juxtaposées et étant formés par des canaux, des ouvertures de section ou similaires.

2. Appareillage à lit fluidisé selon la revendication 1, **caractérisé en ce que** les zones de processus (6) individuelles sont disposées les unes derrière les autres et/ou les unes à côte des autres.

3. Appareillage à lit fluidisé selon la revendication 1 ou 2, **caractérisé en ce que** la dimension des zones de processus (6) individuelles est identique et/ou différente.

4. Appareillage à lit fluidisé selon l'une quelconque des revendications 1 à 3, **caractérisé en ce que** les zones de processus (6) individuelles sont séparées les unes des autres dans la zone des chambres d'air frais (8) par des segmentations (4).

5. Appareillage à lit fluidisé selon l'une quelconque des revendications 1 à 4, **caractérisé en ce que** l'orifice d'alimentation en matériaux solides (13) dans la première zone de processus (6) est disposée côté frontal ou sur une face longitudinale de la paroi de reflux de jet (2).

6. Appareillage à lit fluidisé selon l'une quelconque des revendications 1 à 5, **caractérisé en ce que** les déversoirs (5) sont disposés entre les zones de processus (6) individuelles, de sorte qu'il s'effectue un guidage sinueux du matériau à travers les zones de processus (6) individuelles de l'appareillage à lit fluidisé.

7. Procédé d'actionnement d'un appareillage à lit fluidisé selon l'une quelconque des revendications 1 à 6, dans lequel
- il s'effectue un processus discontinu ou continu de fluidisation et de traitement thermique de particules quelconques de forme largement quelconque et de dimensions et masses quelconques,
- le matériau destiné à être traité est fluidisé dans la zone de processus dans un flux de particules,
- le milieu de fluidisation est amené du dessous à la zone de processus par un système de soufflage de gaz commandable,
**caractérisé en ce que**, pour influencer le temps de séjour, le matériau destiné à être traité est amené successivement à au moins deux zones de processus (6) et traverse celles-ci, la direction de transport du matériau (F) par rapport à l'écoulement du moyen de fluidisation s'effectuant dans l'écoulement croisé.

8. Procédé selon la revendication 7, **caractérisé en ce que** la valeur de la vitesse du flux de particules (15) dans la zone respective du processus (6) est comprise entre celle présente dans le lit fixe traversé et celle dans la zone limite du transport aérien du matériau destiné à être traité.

9. Procédé selon la revendication 7 ou 8, **caractérisé en ce que** différentes conditions de processus peuvent être réglées dans les zones de processus (6) individuelles.

10. Procédé selon l'une quelconque des revendications 7 à 9, **caractérisé en ce que** les conditions de processus dans les zones de processus (6) individuelles peuvent être réglées par la configuration et la dimension des zones de processus (6) respectives et/ou par des différences de vitesses d'écoulement, de températures et de courants de volume du milieu de fluidisation amené.

11. Procédé selon l'une quelconque des revendications 8 à 10, **caractérisé en ce que** le transport du matériau s'effectue de façon sinueuse à travers les zones de processus (6) individuelles de l'appareillage à lit fluidisé.
